# EUROPEAN PATENT SPECIFICATION

(11) **EP 4 402 431 B1**
(45) Date of publication and mention of the grant of the patent: **03.09.2025**
(21) Application number: 21957394.6
(22) Date of filing: 16.09.2021
(51) Int. Cl.: G01B 21/20, G01B 21/04, G01B 5/28

(54) **SWING ARM PROFILOMETER AND METHOD OF MEASUREMENT WITH THIS PROFILOMETER**
SCHWENKARMPROFILOMETER UND MESSVERFAHREN MIT DIESEM PROFILOMETER
PROFILOMÈTRE À BRAS OSCILLANT ET PROCÉDÉ DE MESURE AVEC CE PROFILOMÈTRE

(43) Date of publication of application: 24.07.2024
(73) Proprietor: Univerzita Palackého v Olomouci, 771 47 Olomouc (CZ)
(72) Inventor: SCHOVÁNEK, Petr, 751 31 Lipník nad Becvou (CZ); MICHAL, Stanislav, 750 00 Prerov (CZ); HRABOVSKÝ, Miroslav, 783 01 Olomouc - Slavonín (CZ); PALATKA, Miroslav, 783 01 Olomouc - Nemilany (CZ); PECH, Miroslav, 783 53 Velká Bystrice (CZ); MANDÁT, Dusan, 751 05 Kokory 82 (CZ)
(74) Representative: Soukup, Petr
(86) International application number: PCT/CZ2021/000045
(87) International publication number: WO 2023/041100

(56) References cited:
- US-A1- 2005 235 507
- US-A1- 2005 235 507
- US-A1- 2008 072 442
- US-A1- 2008 072 442

## Description

### Field of Technology

The invention falls within the field of measuring technology in optics and precision engineering, specifically the measurement and inspection of the shape of planar and spherical large-scale surfaces and it concerns a swing arm profilometer and the measurement method of this profilometer.

### State of the art to date

Measuring the shape of the functional surfaces of precise mechanical and optical parts is a key component of the production process, is essential for interoperational inspections, final inspections, certification of finished products and similar applications. Similar devices may serve as sources of shape data of a surface for CNC machine tools before its further machining. Furthermore, the measured data may be used to monitor changes to the shape of already completed products, initiated by the physical properties changes to or for example the method of their assembly into more complex subassemblies.

Apart from interferometric, portal co-ordinates or other traditional devices for shape measuring of the precise large-scale components surfaces, one possibility is a measurement method that uses a so-called "swing arm" profilometer, in other words a profilometer with a swinging arm. This method uses a distance measuring probe, which is mounted on the end of an arm moving along a trajectory above the measured surface. Due to the principle of the device, the trajectory of the probe at the end of the arm is always in space tilted circle arc shape, in other words a circle with an axis of rotation deviating from the vertical, with the center of this circle lying on the measuring arm axis of rotation. The normal of the surface of the circle is parallel to the axis of rotation of the measuring arm and the radius of the circle is equal to the perpendicular distance of the measuring point of the probe from the axis of rotation of the arm. The trajectory of the end of the arm with the probe, an arc in space, can be precisely matched to the surface of a virtual sphere. The surface of the virtual sphere in space comprises a reference surface, from which the measuring probe measures the actual distance to the surface of the sample. Changing the angle of inclination of the arm also tilts the circle along which the probe is moving. This allows changes to the radius of the virtual sphere. Based on the angle of arm rotation, it is therefore possible to generate variously tilted spherical, concave or convex, or planar virtual reference surfaces. The reference shape precision is influenced by the mechanical adjustment of the individual axes of the device and the precision of the engineering of the mechanical parts of the specific device and rotary systems. It is possible to use any kind of measuring probe to determine the distance between surface of a measured sample and this reference. The radius of the virtual reference surface is however not explicitly known, because it is based on the adjusted tilt of the axis and the geometric layout of the entire device. For this reason, swing arm profilometers are typically used only to measure the irregularity, that is non-spherical, surface deformation component. If it is necessary to measure the entire surface shape, both the spherical and non-spherical deformation, another method must be used to record information about the radius of the virtual reference sphere that the end of the arm with its measuring probe is moving along. This can be carried out for example using triangulation methods via one or more associated independent measurement systems.

In general, the measurement is performed by recording of the change in distance between the surface of the sample and the trajectory of the arm as a 2D profile. Measurement is carried out in several individual steps, mutually rotated by the appropriately selected angle of the turntable carrying the measured component. From the 2D profiles overlapping in the axis of rotation of the turntable carrying the measured component, resulting into computer-generated 3D map of the entire measured surface.

The measurements using swing arm profilometers issue is addressed in detail, for example, in the publication King, Christopher; Callender, Matthew; Efstathiou, Apostolos; Walker, David; Gee, Anthony; Lewis, Andrew; Oldfield, Simon; Steel, Robert; (2006), "A 1 m swing-arm profilometer for large telescope mirror elements*.",* which includes a theoretical discussion of the method and the results of initial tests. However, the authors only mention measuring the deviation of the sample from an ideal sphere, which radius and shape is unknown. In the publication Su, Peng; Parks, Robert; Wang, Yuhao; Oh, Chang; Burge, James, "Swing-arm optical coordinate measuring machine: Modal estimation of systematic errors from dual probe shear measurements.", Optical Engineering 51(4), 043604 (2012*),* a system is described using two measuring probes placed side-by-side on one end of the measuring arm. This solution has the goal of finding and further compensating for inaccuracies coming out of the movement of the end of the arm resulting from imperfections in the bearing on which the arm rotates. The described solution however provides no information about the trajectory of the measuring probe from a global view. The measurement only results in finding small, irregular deviations, not the radius of the sphere alongside which the probes are moving. A swing arm profilometer is also described in the document CN105300270A, in which the deviation from the ideal sphere is evaluated using a capacitive non-contact probe and where the surface of the sample must be electrically conductive, while the device does not use a reference surface. The requirement of surface conductivity significantly complicates the application of this method on optical elements made out of glass or other nonconductive materials. The paper CN110017795A introduces a device with a contact or non-contact probe mounted at the end of a rotating arm. And this one again compares the shape of a surface with an "ideal sphere" generated by the movement of the end of the arm. The shape and radius of this sphere is not however made clear in the paper. A swing arm profilometer and probe at the end of a rotating arm is also described in the document CN101936699A. However, in this design the axis of rotation of the arm cannot be tilted. The described device measures only deviations from the plane and makes it impossible to measure concave or convex surfaces. In the paper CN104677280A, determination of the position of the main rotational axis in space is proposed using four laser trackers. To map the reference trajectory of the measuring probe, this solution requires four another devices. The paper CN104019750A proposes using a laser tracker to determine the effective length of the arm of the swing arm profilometer. This solution refines the measurements of this profilometer but fails to provide information about the total shape of the reference curve that the end of the arm with the probe is moving along.

The goal of the submitted invention is to propose a device to determine the 3D surface shape of large-scale parts, both planar as well as spherical, aspherical and free form surfaces with small deviations from the ideal sphere. And in addition the other goal is to propose the measurement method working with such a device.

### Principle of the Invention

The established goal is achieved through the invention, which is a swing arm profilometer comprised of a base, on which is mounted a sample table, where the arm is mounted to swing horizontally on a support block and one of its end sections overlaps a sample table, where at this end section of the arm, sliding firstly along the longitudinal axis of the arm and secondly vertically, perpendicular to the longitudinal axis of the arm, there is mounted an object probe. The principle of the invention is that opposite the sample table, under the second end section of the arm on the base, there is a standard table and above it on the arm, sliding firstly along the longitudinal axis of the arm and secondly vertically, perpendicular to the longitudinal axis of the arm, there is mounted a reference probe. The arm is mounted on the support block with its area situated above the connecting line between the geometric centers of the sample table and the standard table, and the arm is on the support block mounted so as to swing vertically, too.

The preferred implementation is for the support block to be mounted on the base to slide along the connecting line between the geometric centers of the sample table and the standard table.

It is further advantageous, if the sample table to consists of a fixed sample chassis, on which the sample plate is mounted, while the sample plate is mounted on the sample chassis so that it firstly rotates around the vertical axis perpendicular to the plane of the base and passing through the center of the chassis, but also slides in the longitudinal as well as transverse directions, and can also be tilted in any direction, and the normal of its surface can be tilted relative to the vertical in any direction.

In another preferred implementation, the standard table is comprised of a fixed standard chassis on which is mounted a standard platform, which is mounted on the standard chassis firstly sliding longitudinally and transversely, and secondly tilted in any direction, where the normal of its surface can be tilted in any direction relative to the vertical.

Furthermore it is advantageous for there to be, mounted on the support block to swing along the horizontal axis, perpendicular to the connecting line between the geometric centers of the sample table and standard table, a rotary engine, on whose shaft coaxial with the axis perpendicular to the horizontal axis of the oscillation of the motor, there is mounted a yoke opened downwards, between whose legs around the axis parallel to the axis of oscillation of the motor and perpendicular to the axis of rotation of the motor shaft, a rotary arm is mounted.

The principle of the invention is also the measurement method of a swing arm profilometer according to the invention, where on a sample table there is mounted a sample, on a standard table there is mounted a standard and an arm carries out a swinging motion horizontally, where the object probe measures the distance from the surface of the sample and the reference probe measures the distance from the reference surface of the standard, with the data gained being processed by computer into a resulting 3D model of the entire measured surface.

The submitted invention achieves a new and greater effect using of the reference probe and its associated standard reference surface which allows more precise determination of the trajectory shape on which the object probe is moving above the measured surface of the sample. Use of a standard thusly eliminates imperfections in the model of the measured sample's surface, where in other measurement methods using swing arm profilometers are associated with imperfections in production of its mechanical parts, rotary systems and determination of the reference curve for measuring distances on the profiles of measured sample individual sections. The result of the measurement is the global shape of the surface of the measured sample gained from measurements of the reference probe and the associated 3D map of local deviations gained from the object probe, then. The device allows measurement of both planar and spherical parts, as well as aspherical and free form components with small deviations from the ideal sphere. The accuracy of the measurements achieved by the described invention depends on the parameters of the selected probes. The device requires no further systems to determine the reference surface, nor any further auxiliary or additional devices, while the dimensions of the tested surfaces are limited only by the dimensions of the profilometer in question.

### Explanations of Drawings

Specific examples of the invention design are shown in the accompanying drawings which present:
- Fig. 1: is an axonometric view of the profilometer,

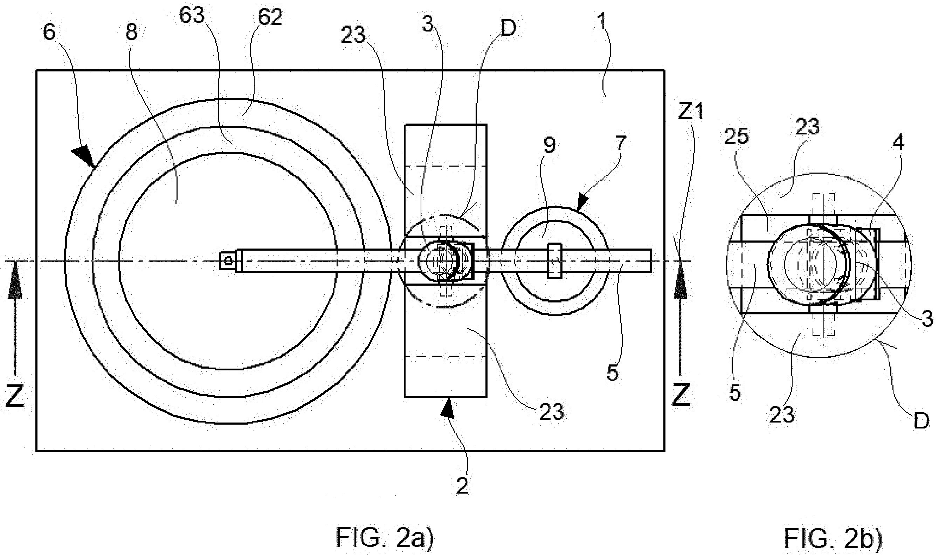

- Fig. 2a): a top view of the profilometer,
- Fig. 2b): is the detail D of the attachment of the profilometer arm from fig. 2a) when viewed from above and
- Fig. 3: is a vertical section of the profilometer along the Z-Z plane from figure 2a).

The drawings illustrating the present invention and the following examples of a particular design do not in any way limit the scope of protection stipulated in the definition, but merely illustrate the principle of the invention.

### Examples of invention embodiments

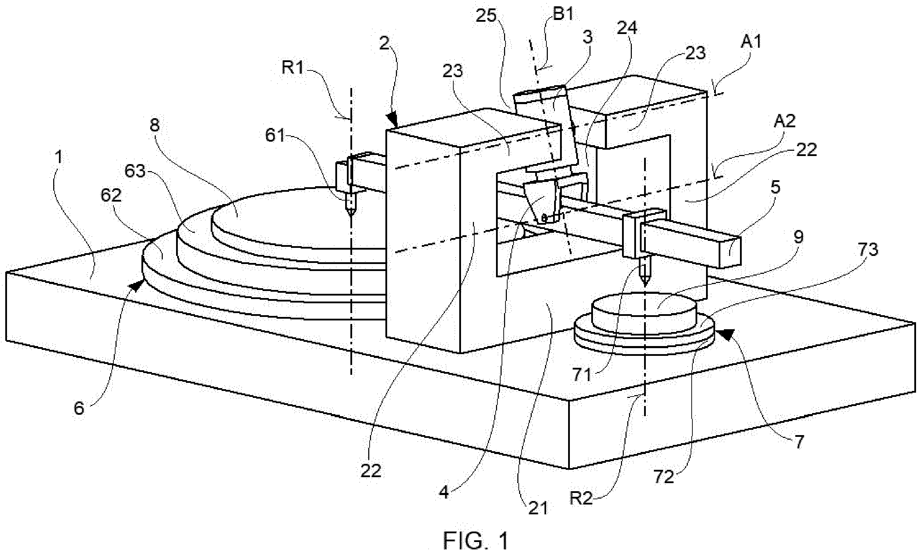

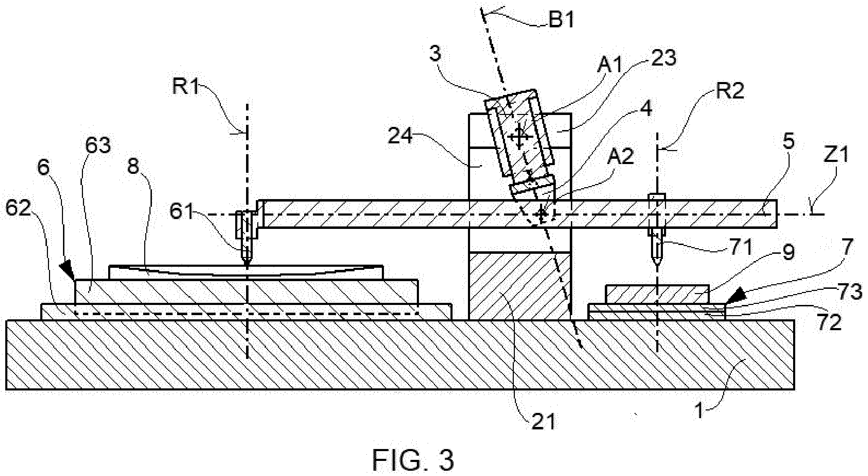

The swing arm profilometer as illustrated is comprised of the transverse surface of base 1, on one part of which there is mounted a circular five-axis sample table 6 and on another part of the base 1 opposite to it, there is four-axis standard table 7 mounted. The sample table 6 consists of a fixed sample chassis 62, on which is mounted a sample plate 63. While the sample plate 63 is mounted on the sample chassis 62 so that it firstly rotates around the vertical axis R1 perpendicular to the plane of the base 1 and passing through the center of the sample chassis 62, secondly sliding in the longitudinal as well as transverse directions, and thirdly tiltable in any direction, where the normal of its surface is tilted in any direction relative to the vertical. The four-axis standard table 7 is comprised of a fixed standard chassis 72 on which is mounted a standard platform 73, which is mounted on the standard chassis 72. firstly sliding longitudinally and transversely, and secondly tiltable in any direction, where the normal of its surface is tilted in any direction relative to the vertical. Between the sample table 6 and the standard table 7, on the base 1, sliding in the direction of the connecting line between the centers of the sample table 6 and the standard table 7 there is mounted a support block 2 in the shape of a prism with a support chamber 24, which is passable in the direction of the connecting line between the centers of the sample table 6 and the standard table 7 and is open in the upward direction via the gap 25. The support block 2 is comprised of a horizontal base 21, from which two parallel vertical supports 22 come forth, where their upper end sections are connected to horizontal supports 23, between which is situated the aforementioned gap 25 and which are parallel to the horizontal base 21. Between the horizontal supports 23 in the gap 25, swinging around the horizontal axis A1 perpendicular to the connecting line between the centers of the sample table 6 and the standard table 7, there is mounted a rotary motor 3, so that the unshown shaft of the motor 3, which is coaxial with axis B1, is perpendicular to the axis A1, while the swinging motion of motor 3 around axis A1 is driven by an unshown controller. On the shaft of motor 3, rotating around axis B1, which is perpendicular to axis A1, there is mounted a yoke 4 opening downwards, situated in the support chamber 24 between vertical supports 22, as illustrated in fig. 3 and fig. 1. Between the legs of yoke 4, rotating around axis A2, which is parallel to axis A1 and perpendicular to axis B1, see fig. 3, there is mounted an arm 5, passing through the support chamber 24, with the swing of arm 5 around axis A2 being adjustable and fixed with an unshown mechanism. The longitudinal axis Z1 of arm 5 in its basic rest state position runs parallel to the connecting line between the centers of the sample table 6 and the standard table 7, while the end sections of arm 5 are situated above the sample table 6 and also above the standard table 7. At the end section of arm 5 situated above the sample table 6, there is mounted an object probe 61, which is mounted that way to slide according to the longitudinal axis of arm 5, and also adjustable vertically perpendicular to the longitudinal axis Z1 of arm 5. At the end section of arm 5 situated above the standard table 7, there is mounted a reference probe 71, which is mounted so as to slide according to the longitudinal axis Z1 of arm 5, as well as adjustable vertically along axis R2 perpendicular to the longitudinal axis Z1 of arm 5. On the sample plate 63 of the sample table 6 is mounted the measured sample 8 and on the standard platform 73 of the standard table 7 is mounted the reference standard 9 with its reference surface.

The measurement method is based on using data from two distance measuring probes, where the object probe 61 measures the distance from the measured sample 8 surface and the reference probe 71 measures the distance from the reference surface of the standard 9. The object probe 61 moves over the surface of the measured sample 8 along a trajectory which is the arc of a tilted circle, which center is on axis B1 and which radius is equal to the perpendicular distance of the measuring point of the object probe 61 from the axis B1, with the normal of the surface of this circle being parallel to axis B1. This circle arc may be precisely fitted to the surface of a virtual ideal sphere which thus forms the reference trajectory of the object probe 61, from which the object probe 61 measures the distance to the actual surface of the sample 8. The inclination of axis B1 is therefore defining the global shape of the reference surface of the virtual sphere. The reference probe 71 moves along a trajectory which is the arc of a tilted circle, which center is on axis B1 and which radius is equal to the perpendicular distance of the measuring point of the reference probe 71 from the axis B1, with the normal of the surface of the circle being parallel to axis B1. The reference probe 71 measures the distance of its trajectory from the reference surface of the standard 9.

Using an unshown controller of the swinging mount of the motor 3 around axis A1 between the horizontal supports 23, the inclination of axis B1 is set, so that the object probe 61 moves at the most equidistant distance above the surface of the measured sample 8, before the measurement itself. Further, the inclination of arm 5 is set and fixed using its swinging mount in yoke 4 around axis A2, so that the object probe 61 and reference probe 71 are facing perpendicular to the surface of the base 1 and parallel to axis R1, as well.

A sliding movement of the support block 2 along the connecting line between the centers of the sample table 6 and the standard table 7 changes the trajectory of the object probe 61, so that during its measuring movement it moves precisely across the center of the sample 8.

The measurement itself is performed by the swinging movement of the arm 5 around axis B1, which is determined by rotating the shaft of the rotary motor 3 and on this shaft, the affixed yoke 4, on which the arm 5 is mounted, while the object probe 61 and reference probe 71, during the measurement process, move along arc trajectories determined by the specific inclination settings of axis B1. When measuring a spherical surface and with the correct setting of the inclination of axis B1, the object probe 61 moves along the surface of a virtual sphere with the same radius as the radius of the measured sample 8. The precise value of the radius of this sphere is not known from the measurements of the object probe 61. The object probe 61 evaluates only the local deviations of the sample 8 from this sphere. The reference probe 71 moves along a trajectory shaped like the arc of a tilted circle above the planar reference surface of the standard 9. The result of its distance measurements will always be an arc in space. From the measured shape of the arc and the known position of object probe 61 as well as reference probe 71 on arm 5, one can calculate the radius of the perfect sphere on which surface the object probe 61 is moving and therefore also the actual radius of the surface of the sample 8.

If measuring an aspherical sample or a sample with a general surface, without symmetry, a so-called freeform sample, the measurements of the reference probe 71 will be used to establish the radius of the closest possible sphere, the so-called best fit sphere of the measured sample 8. At the same time one can map out and compensate for small inaccuracies in the movement of both probes 61 and 71 due to imperfections in the bearing and rotary systems of the device.

The sample plate 63 with measured sample 8 is rotated on the turntable between each sweep of arm 5 with the object probe 61, to face in predetermined directions. Surface height 2D data of so-called sections is saved to the memory of an unshown controller software compartment and subsequently processed into the resulting 3D model of the entire measured surface.

### Industrial applicability

The swing arm profilometer with two probes according to the invention is intended for use in gaining information on the shape of a measured surface, both the non-spherical component of the deviation as well as the global shape of the measured surface. The device can be used according to the principle described for interoperational or final inspections, certification or in other applications, where it is necessary to know the shape of large-scale surfaces which parameters should meet the technical requirements of the measuring probes used, after machining. The 3D data obtained can also serve as a surface map for other highly precise CNC machining operations or another processes.

## Claims

1. A swing arm profilometer comprised of a base (1), on which is mounted a sample table (6), where the arm (5) swings in the horizontal direction from its mount on the support block (2) and one of its end sections overlapping the sample table (6), where on this end section of the arm (5) there slides firstly along the longitudinal axis (Z1) of the arm (5) and secondly vertically, perpendicular to the axis (Z1) a mounted object probe (61), **characterized in that** opposite to the sample table (6) under the second end section of the arm (5) on the base (1) is mounted a standard table (7) and above it on the arm (5) there is mounted sliding firstly along the longitudinal axis (Z1) of the arm (5) and secondly along the vertical axis (R2) perpendicular to axis (Z1) a reference probe (71), where the arm (5) on the support block (2) is mounted with its area situated above the connecting line between the geometric centers of the sample table (6) and standard table (7) and where the arm (5) is on the support block (5) mounted so as to swing vertically, too.

2. A swing arm profilometer according to claim 1, **characterized in that** its support block (2) on the base (1) is mounted so as to slide along the connecting line between the geometric centers of the sample table (6) and the standard table (7).

3. A swing arm profilometer according to claims 1 or 2, **characterized in that** the sample table (6) consists of a fixed sample chassis (62), on which is mounted a sample plate (63), while the sample plate (63) is mounted on the sample chassis (62) firstly so that it rotates around the vertical axis (R1) perpendicular to the plane of the base (1) and passing through the center of the sample chassis (62), firstly sliding in the longitudinal as well as transverse directions, and secondly tiltable in any direction, where the normal of its surface is tilted in any direction.

4. A swing arm profilometer according to one of the claims 1 to 3, **characterized in that** the standard table (7) is comprised of a fixed standard chassis (72) on which is mounted a standard platform (73), which is mounted on the standard chassis (72), mounted firstly sliding longitudinally and transversely, and secondly tiltable in any direction, where the normal of its surface is tilted in any direction.

5. A swing arm profilometer according to one of the claims 1 to 4, **characterized in that** on the support block (2) there is mounted, so as to swing along the horizontal axis (A1), which is perpendicular to the connecting line of the geometric centers of the sample table (6) and standard table (7), a rotary motor (3), on whose shaft coaxial with axis (B1), which is perpendicular to axis (A1), there is mounted a yoke (4) opened downwards, between whose legs swinging around the axis (A2), which is parallel to axis (A1) and perpendicular to axis (B1) there is mounted an arm (5).

6. A measurement method using a swing arm profilometer on a device according to one of the claims 1 to 5, **characterized in that** on the sample table (6) there is mounted a sample (8), on the standard table (7) there is mounted a reference standard (9) and the arm (5) carries out a swinging motion horizontally, where the object probe (61) measures the distance from the surface of the sample (8) and the reference probe (71) measures the distance from the reference surface of the standard (9), while the collected data are processed by a controlling software block into a resulting 3D model of the whole measured surface.

## Patentansprüche

1. Profilometer mit einem schwenkbaren Arm (5), bestehend aus einer Basis (1), auf der ein Probentisch (6) angeordnet ist, wobei der Arm (5) schwenkbar in horizontaler Richtung auf einem Tragblock (2) gelagert ist und ein Endbereich des Arms über den Probentisch (6) reicht, wobei auf diesem Endbereich des Arms (5) eine Objektsonde (61) sowohl verschiebbar entlang der Längsachse (Z1) des Arms (5) als auch in vertikaler Richtung senkrecht zur Achse (Z1) angeordnet ist, **dadurch gekennzeichnet, dass** entgegengesetzt zum Probentisch (6) unter dem zweiten Endbereich des Arms (5) auf der Basis (1) ein Referenztisch (7) angeordnet ist und über diesem am Arm (5) eine Referenzsonde (71) sowohl verschiebbar entlang der Längsachse (Z1) des Arms (5) als auch entlang der vertikalen Achse (R2), die senkrecht zur Achse (Z1) steht, angeordnet ist, wobei der Arm (5) auf dem Tragblock (2) mit seinem Bereich gelagert ist, der sich über der Verbindungslinie der geometrischen Mittelpunkte des Probentisches (6) und des Referenztisches (7) befindet, und wobei der Arm (5) im Tragblock (2) auch in vertikaler Richtung schwenkbar gelagert ist.

2. Profilometer mit schwenkbarem Arm (5) nach Anspruch 1, **dadurch gekennzeichnet, dass** der Tragblock (2) auf der Basis (1) verschiebbar entlang der Verbindungslinie der geometrischen Mittelpunkte des Probentisches (6) und des Referenztisches (7) gelagert ist.

3. Profilometer mit schwenkbarem Arm (5) nach Anspruch 1 oder 2, **dadurch gekennzeichnet, dass** der Probentisch (6) aus einem festen Probengerüst (62) besteht, auf dem eine Probenteller (63) gelagert ist, wobei der Probenteller (63) auf dem Probengerüst (62) sowohl um eine vertikale Achse (R1), die senkrecht zur Basisfläche (1) verläuft und durch das Zentrum des Gerüsts (62) geht, drehbar, als auch verschiebbar in Längs- und Querrichtung sowie neigbar in beliebiger Richtung gelagert ist, wobei die Normale seiner Oberfläche beliebig geneigt sein kann.

4. Profilometer mit schwenkbarem Arm (5) nach einem der Ansprüche 1 bis 3, **dadurch gekennzeichnet, dass** der Referenztisch (7) aus einem festen Referenzgerüst (72) und darauf gelagertem Referenzlager (73) besteht, welches auf dem Referenzgerüst (72) sowohl verschiebbar in Längs- und Querrichtung als auch neigbar in beliebiger Richtung gelagert ist, wobei die Normale seiner Oberfläche beliebig geneigt sein kann.

5. Profilometer mit schwenkbarem Arm (5) nach einem der Ansprüche 1 bis 4, **dadurch gekennzeichnet, dass** auf dem Tragblock (2) ein Drehmotor (3) schwenkbar um eine horizontale Achse (A1) gelagert ist, welche senkrecht zur Verbindungslinie der geometrischen Mittelpunkte des Probentisches (6) und des Referenztisches (7) steht, wobei auf dessen Welle, die koaxial zur Achse (B1) steht, welche senkrecht zur Achse (A1) ist, ein nach unten offener Bügel (4) befestigt ist, zwischen dessen Schenkeln ein Arm (5) schwenkbar um die Achse (A2) gelagert ist, welche parallel zur Achse (A1) und senkrecht zur Achse (B1) verläuft.

6. Verfahren zur Messung mit einem Profilometer mit schwenkbarem Arm (5) an einer Vorrichtung nach einem der Ansprüche 1 bis 5, **dadurch gekennzeichnet, dass** auf dem Probentisch (6) eine Probe (8) und auf dem Referenztisch (7) ein Referenznormal (9) angeordnet sind und der Arm (5) eine Schwenkbewegung in horizontaler Richtung ausführt, wobei mit der Objektsonde (61) der Abstand von der Oberfläche der Probe (8) und mit der Referenzsonde (71) der Abstand von der Oberfläche des Referenznormals (9) gemessen wird, und die gewonnenen Daten von einer Steuerungssoftware zu einem resultierenden 3D-Modell der gesamten gemessenen Oberfläche verarbeitet werden.

## Revendications

1. Le profilomètre à bras oscillant (5) formé d'une base (1) sur laquelle est montée une table d'échantillonnage (6). Le bras (5) est monté oscillant horizontalement sur le bloc de support (2) et l'une de ses extrémités s'étend au-dessus de la table d'échantillonnage (6). Une sonde d'objet (61) est montée sur cette extrémité du bras (5) de manière coulissante le long de l'axe longitudinal (Z1) du bras (5) et verticalement, perpendiculairement à cet axe (Z1). Ce profilomètre est **caractérisé en ce qu'**à l'opposé de la table d'échantillonnage (6), une table de référence (7) est montée sous la seconde extrémité du bras (5) sur la base (1) et au-dessus de celle-ci, une sonde de référence (71) est montée sur le bras (5) de manière coulissante le long de l'axe longitudinal (Z1) du bras (5) et le long de l'axe vertical (R2) perpendiculaire à cet axe (Z1). Le bras (5) est monté sur le bloc de support (2), sa région étant située au-dessus de la ligne reliant les centres géométriques de la table d'échantillonnage (6) et d'une table de référence (7) et où le bras (5) est monté dans le bloc de support (2) de manière pivotante et dans le sens vertical.

2. Le profilomètre à bras oscillant (5) selon la revendication 1, **caractérisé en ce que** le bloc de support (2) est monté sur la base (1) le long de la ligne reliant les centres géométriques de la table d'échantillonnage (6) et de la table de référence (7).

3. Le profilomètre à bras oscillant (5) selon la revendication 1 ou 2, **caractérisé en ce que** la table d'échantillonnage (6) comprend un châssis d'échantillonnage fixe (62) sur lequel la plaque d'échantillonnage (63) est montée. La plaque d'échantillonnage (63) est montée sur le châssis d'échantillonnage (62) d'une part de manière rotative autour d'un axe vertical (R1) perpendiculaire au plan de la base (1) et passant par le centre du châssis (62), d'autre part de manière rigide dans les directions longitudinale et transversale, et d'autre part inclinée dans n'importe quelle direction, la normale de sa surface étant inclinée de manière arbitraire.

4. Le profilomètre à bras oscillant (5) selon l'une quelconque des revendications 1 à 3, **caractérisé en ce que** la table de référence (7) comprend un châssis de référence fixe (72) et un lit de référence (73) monté sur celui-ci, ce dernier étant monté sur le châssis de référence (72) d'une part de manière rigide dans les directions longitudinale et transversale et d'autre part incliné dans n'importe quelle direction, la normale de sa surface étant inclinée de manière arbitraire.

5. Le profilomètre à bras oscillant (5) selon l'une quelconque des revendications 1 à 4, **caractérisé en ce qu'**un moteur rotatif (3) est monté oscillant sur le bloc de support (2) le long d'un axe horizontal (A1) perpendiculaire à la ligne reliant les centres géométriques de la table d'échantillonnage (6) et de la table de référence (7), sur l'arbre duquel, coaxial à l'axe (B1), qui est perpendiculaire à l'axe (A1), est fixée une fourche (4) ouverte vers le bas, entre les jambes de laquelle est monté oscillant un bras (5) autour de l'axe (A2) parallèle à l'axe (A1) et perpendiculaire à l'axe (B1).

6. Procédé de mesure avec un profilomètre à bras oscillant (5) sur un dispositif selon l'une quelconque des revendications 1 à 5, **caractérisé en ce qu'**un échantillon (8) est placé sur une table d'échantillonnage (6), un étalon de référence (9) est placé sur une table de référence (7) et le bras (5) effectue un mouvement d'oscillation dans une direction horizontale, la distance de la surface de l'échantillon (8) est mesurée par la sonde d'objet (61) et la distance de la surface de l'étalon (9) est mesurée par la sonde de référence (71), et les données obtenues sont traitées par le bloc logiciel de commande dans le modèle 3D résultant de l'ensemble de la surface à mesurer.
